# EUROPEAN PATENT APPLICATION

(11) **EP 3 848 423 A1**
(43) Date of publication of application: **14.07.2021**
(21) Application number: 20151335.5
(22) Date of filing: 13.01.2020
(51) Int. Cl.: C09D 175/04, C09J 175/04, C09D 7/40, C08G 18/08

(54) **COMPOSITION, PREPARATION METHOD AND APPLICATION THEREOF**

(71) Applicant: Covestro Intellectual Property GmbH & Co. KG, 51373 Leverkusen (DE)
(72) Inventor: The designation of the inventor has not yet been filed
(74) Representative: Levpat

(57) **Abstract**

The present invention relates to a composition, in particular a composition having few VOCs and weak odor, preparation and application of the composition, a two-component system comprising the composition and its application, as well as an article coated or bonded by using the composition or the two-component system. The composition comprises at least one aqueous polyurethane dispersion, at least one adsorbent, and at least one chelating agent; wherein the adsorbent is one or more of the following: a hydrophilic molecular sieve, an amphiphilic molecular sieve and a hydrophilic fumed nano-silica; the aqueous polyurethane dispersion is present in an amount of 50 wt% to 99 wt%, the adsorbent in an amount of 0.1 wt% to 3 wt%, and the chelating agent in an amount of 0.05 wt% to 1 wt%, in each case based on the amount of the composition as 100 wt%.

## Description

### Technical field

The present invention relates to a composition, preparation and application of the composition, a two-component system comprising the composition and its application, as well as an article coated or bonded by using the composition or the two-component system.

### Background

With the improvement of people's living standards and the popularization of automobile in ordinary families, people are paying more and more attention to the quality of air inside a car. The evaluation of air quality in the car lies mainly in two aspects, i.e., the content of volatile organic compounds (VOCs) in the car and the degree of odor in the car. According to statistics, with reference to indoor air quality standards, nearly 90% of vehicles have the problem of excessive VOC content. Excessive VOC content may cause imbalance of immune level in the human body, affect the nervous system function to lead to the appearance of dizziness, headache, lethargy, weakness and other symptoms, affect the digestive system to lead to the appearance of loss of appetite, nausea, etc., and in severe cases even damage the liver and hematopoietic system to threaten the physical health of humans. In the PP100 (number of problems per 100 cars) list of Initial Quality Study (IQS), "unpleasant odor/smell" has been always at the top of the list in recent years. Although these odors are not necessarily threatening the physical health of humans, consumers often don't want the presence of odor in the car. There are many sources of VOCs and odor in the car, such as from seat foam, fabric coatings, plastic interior trim, adhesives and so on.

CN 104151540 A discloses a method for preparing polyurethane foam with low VOC content and high resilience by using a polyether polyol, which is characterized in that a polyol compound used as a starting agent is reacted with an epoxy compound at a pressure of 0-0.6 MPa and a temperature of 60-140 °C in the presence of an alkali metal hydroxide as a catalyst to stepwise polymerize and then subjected to special post-treatment to obtain the product; wherein the mass of the polyol compound accounts for 10% - 19.5% of the total mass, the mass of the epoxy compound accounts for 80% - 89.5% of the total mass, and the mass of the alkali metal hydroxide accounts for 0.2% - 0.5% of the total mass.

CN 104592878 B discloses an environmentally friendly aqueous paint comprising: an aqueous resin dispersion, water, a composite anion powder, an anion additive, a film forming aid, an antifoaming agent, a thickener, a dispersing agent and a pH-adjusting agent, and a preparation method thereof. The composite anion powder consists of a crystal salt, nano-silica, nano-phosphoric acid titanium dioxide, and nano-zinc dioxide. Nano-silica, nano-phosphoric acid titanium dioxide and nano-zinc dioxide as photocatalyst materials can effectively degrade harmful gases such as formaldehyde in the air under illumination, and generate superoxide anion radicals and also negative oxygen ions.

The aqueous dispersion system has a very low VOC content and can effectively solve the problem of excessive VOC content in the car. Besides, the aqueous dispersion system itself has weak odor and can solve the problem of the presence of unpleasant odor in the car. However, consumers are increasingly demanding weak odor in the car, and existing aqueous dispersion systems are difficult to meet this demand.

CN 103980814 A discloses an odorless, matt, wear-resistant polyurethane top-coat paint and a preparation method thereof, wherein it is prepared by mixing a main agent, a curing agent and a diluent in a weight ratio of 1-1.4:0.5-0.7:0.7-1.2; wherein the main agent and the curing agent components are present in a specific ratio of 1-1.4:0.5-0.7 in order to fully react the hydroxyl groups in the main agent with the isocyanate groups in the curing agent where the optimum molar ratio of the hydroxyl groups and the isocyanate groups is 2:1, so that the best ratio thereof can be achieved during the application process, and stable polyurethane bonds can be formed by a complete reaction. In this way, it is possible to result in an odorless effect and eliminate the pungent odor caused by the raw materials per se.

CN 106009271 A discloses a modified polypropylene composition comprising a blend of the following components: polypropylene, ethylene-propylene-grafted maleic anhydride copolymer, a reinforcing filler, a deodorant, an antioxidant and a processing aid, wherein the deodorant is an organic salt and/or a silicate having micropores selected from at least one of sodium silicate, aluminum silicate, magnesium silicate and calcium silicate and having a specific surface area of 200 to 600 m²/g, preferably 300 to 500 m²/g, and wherein the micropores on the microporous silicate have an average pore diameter of 0.2 to 2 nm, preferably 0.1 to 1 nm.

It is desired, on the basis of existing products, to develop a new composition with few VOCs and weak odor to further reduce the odor to satisfy strict requirements on odor in application fields such as coatings or adhesives for automobile interior trim.

### Summary of the invention

It is an object of the invention to provide a composition, in particular a composition having few VOCs and weak odor, preparation and application of the composition, a two-component system comprising the composition and its application, as well as an article coated or bonded by using the composition or the two-component system.

The composition according to the present invention comprises at least one aqueous polyurethane dispersion, at least one adsorbent, and at least one chelating agent; wherein the adsorbent is one or more of the following: a hydrophilic molecular sieve, an amphiphilic molecular sieve and a hydrophilic fumed nano-silica; the aqueous polyurethane dispersion is present in an amount of 50 wt% to 99 wt%, the adsorbent in an amount of 0.1 wt% to 3 wt%, and the chelating agent in an amount of 0.05 wt% to 1 wt%, in each case based on the amount of the composition as 100 wt%.

According to one aspect of the invention, there is provided a method of preparing a composition provided in accordance with the present invention comprising the step of mixing the aqueous polyurethane dispersion, the adsorbent and the chelating agent in any manner.

According to another aspect of the invention, there is provided the use of a composition provided in accordance with the present invention for the preparation of an article.

According to still another aspect of the invention, there is provided an article comprising a substrate and a coating formed by applying a composition provided in accordance with the present invention to the substrate.

According to yet another aspect of the invention, there is provided a method of producing a coated article comprising the steps of applying a composition provided in accordance with the present invention to a surface of a substrate and then curing it.

According to yet another aspect of the invention, there is provided a method of producing a bonded article comprising the steps of:
i. applying a composition provided in accordance with the present invention to at least one surface of a substrate; and
ii. contacting the substrate surface treated in step i with a surface of the substrate itself or an additional substrate to obtain the bonded article.

According to yet another aspect of the invention, there is provided a two-component system comprising a component A and a component B, the component A being a composition provided in accordance with the present invention, and the component B being a crosslinking agent. According to yet another aspect of the invention, there is provided the use of a two-component system provided in accordance with the present invention for the preparation of an article.

According to yet another aspect of the invention, there is provided an article comprising a substrate and a coating formed by applying a two-component system provided in accordance with the present invention to the substrate.

The composition according to the present invention is an aqueous composition which has the characteristics of few VOCs. The composition according to the present invention also has the advantage of weak odor, and can satisfy strict requirements on VOCs and odor in application fields such as automobile interior trim, indoor furniture, and so on.

### Detailed description

The present invention provides a composition comprising at least one aqueous polyurethane dispersion, at least one adsorbent, and at least one chelating agent; wherein the adsorbent is one or more of the following: a hydrophilic molecular sieve, an amphiphilic molecular sieve and a hydrophilic fumed nano-silica; the aqueous polyurethane dispersion is present in an amount of 50 wt% to 99 wt%, the adsorbent in an amount of 0.1 wt% to 3 wt%, and the chelating agent in an amount of 0.05 wt% to 1 wt%, in each case based on the amount of the composition as 100 wt%. The present invention also provides a preparation method and application of the composition, particularly in the application fields of coatings and adhesives, a two-component system comprising the composition and its application, as well as an article coated or bonded by using the composition or the two-component system.

The term "curing" as used herein refers to the process of a composition or a two-component system comprising the composition from a liquid state to a solid state.

The term "coating" as used herein refers to a chemical that can be applied to a surface of an article by different coating processes to form a firmly bonded and continuous solid coating having a certain strength.

The term "adhesive" as used herein refers to a chemical that can be applied to a surface of an article by different coating processes to form a coating on the surface of the article itself or on the surfaces of one article and another article, and bond the surface of the article itself or the surfaces of one article and another article. It is also used as a synonym for tackiness agents and/or sealants and/or binders.

The term "polyurethane polymer" as used herein refers to a polyurethaneurea polymer and/or a polyurethane polyurea polymer and/or a polyurea polymer and/or a polythiourethane polymer.

The term "aqueous polyurethane dispersion" as used herein refers to an aqueous polyurethaneurea dispersion and/or an aqueous polyurethane polyurea dispersion and/or an aqueous polyurea dispersion and/or an aqueous polythiourethane dispersion.

The term "polyurethane polymer having linear structure" as used herein refers to a polyurethane polymer having linear structure and free of branched structure.

The term "emulsifier" as used herein refers to a compound comprising an emulsifying group or a latent emulsifying group.

The term "isocyanate-reactive group" as used herein refers to a group containing Zerevitinov-active hydrogen. Zerevitinov-active hydrogen is defined in Rompp's Chemical Dictionary (Rommp Chemie Lexikon), 10th ed., Georg Thieme Verlag Stuttgart, 1996. Generally, the group containing Zerevitinov-active hydrogen is understood in the art to refer to a hydroxyl group (OH), an amino group (NHₓ), and a thiol group (SH).

The term "chelating agent" as used herein refers to a compound capable of forming a stable complex with a metal ion, particularly a heavy metal ion or a transition metal ion.

The term "amphiphilic" as used herein refers to be hydrophilic and lipophilic.

### Composition

The amount of any organic solvent in the composition is preferably no more than 5 wt%, most preferably no more than 0.5 wt%, based on the amount of the composition as 100 wt%.

The composition is an aqueous system, and has the characteristics of few VOCs.

The composition is preferably a coating or an adhesive, most preferably a coating or an adhesive for interior trim.

### Aqueous polyurethane dispersion

The aqueous polyurethane dispersion is preferably present in an amount of 90 wt% to 99 wt%, based on the amount of the composition as 100 wt%.

The aqueous polyurethane dispersion preferably has a solid content of 30 wt% to 70 wt%, based on the amount of the aqueous polyurethane dispersion as 100 wt%.

The amount of any organic solvent remaining in the aqueous polyurethane dispersion is preferably less than 1.0 wt%, based on the solid content of the aqueous polyurethane dispersion as 100 wt%.

The aqueous polyurethane dispersion may be added to the composition directly in the form of a dispersion, or may be added to the composition in the form of a polyurethane polymer and water which are mixed to form a dispersion.

The aqueous polyurethane dispersion comprises a polyurethane polymer and water, wherein the polyurethane polymer is preferably obtained by reacting a system comprising a polyisocyanate, a polyester polyol and an emulsifier.

The polyurethane polymer is preferably a polyurethane polymer having linear structure.

### Polyisocyanate

The polyisocyanate preferably has a functionality of no less than 2, further preferably 2 to 4.

The polyisocyanate is present in an amount of preferably 5 wt% to 70 wt%, further preferably 5 wt% to 40 wt%, more preferably 5 wt% to 35 wt%, and most preferably 10 wt% to 30 wt%, based on the amount of the system for preparing the polyurethane polymer as 100 wt%.

The polyisocyanate is preferably one or more of the following: an aliphatic polyisocyanate, an alicyclic polyisocyanate, an aromatic polyisocyanate, and their derivatives having iminooxadiazinedione, isocyanurate, uretdione, carbamate, allophanate, biuret, urea, oxadiazinetrione, oxazolidinone, acyl urea and/or carbodiimide groups.

The aliphatic polyisocyanate is preferably one or more of the following: 1,6-hexane diisocyanate, 2,2-dimethylpentane diisocyanate, 2,2,4-trimethylhexane diisocyanate, butylene diisocyanate, 1,3-butadiene-1,4-diisocyanate, 2,4,4-trimethyl-1,6-hexane diisocyanate, 1,6,11-undecane triisocyanate, 1,3,6-hexamethylene triisocyanate, 1,8-diisocyanato-4-isocyanatomethyl octane, bis(isocyanatoethyl) carbonate, bis(isocyanatoethyl) ether, lysine methyl ester diisocyanate, lysine triisocyanate, bis(isocyanatomethyl)sulfide, bis(isocyanatoethyl)sulfide, bis(isocyanatopropyl)sulfide, bis(isocyanatohexyl)sulfide, bis(isocyanatomethyl)sulfone, bis(isocyanatomethyl)disulfide, bis(isocyanatoethyl)disulfide, bis(isocyanatopropyl)disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-thiapentane, 1,2,3-tris(isocyanatomethylthio)propane, 1,2,3-tris(isocyanatoethylthio)propane, 3,5-dithia-1,2,6,7-heptane tetraisocyanate, 2,6-diisocyanatomethyl-3,5-dithia-1,7-heptane diisocyanate, 2,5-diisocyanatomethylthiophene, isocyanatoethylthio-2,6-dithia-1,8-octane diisocyanate, thiobis(3-isothiocyanatopropane), thiobis(2-isothiocyanatoethane), dithiobis(2-isothiocyanatoethane), hexamethylene diisocyanate and isophorone diisocyanate, and most preferably one or more of the following: 1,6-hexane diisocyanate and hexamethylene diisocyanate.

The alicyclic polyisocyanate is preferably one or more of the following: 2,5-bis(isocyanatomethyl)-bicyclo[2.2.1]heptane, 2,6-bis(isocyanatomethyl)-bicyclo[2.2.1]heptane, bis(isocyanatomethyl)cyclohexane, isophorone diisocyanate, 2,5-diisocyanatotetrahydrothiophene, 2,5-diisocyanatomethyltetrahydrothiophene, 3,4-diisocyanatomethyltetrahydrothiophene, 2,5-diisocyanato-1,4-dithiane, 2,5-diisocyanatomethyl-1,4-dithiane, 4,5-diisocyanato-1,3-dithiolane, 4,5-bis(isocyanatomethyl)-1,3-dithiolane, 4,5-diisocyanatomethyl-2-methyl-1,3-dithiolane, norbornane diisocyanate (NBDI), xylylene diisocyanate (XDI), hydrogenated xylylene diisocyanate (H₆XDI), 1,4-cyclohexane diisocyanate (H₆PPDI), 1,5-pentane diisocyanate (PDI), m-tetramethylxylylene diisocyanate (m-TMXDI) and cyclohexane diisothiocyanate, and most preferably one or more of the following: isophorone diisocyanate and dicyclohexyl diisocyanate.

The aromatic polyisocyanate is preferably one or more of the following: 1,2-diisocyanatobenzene, 1,3-diisocyanatobenzene, 1,4-diisocyanatobenzene, 2,4-diisocyanatotoluene, ethylphenylene diisocyanate, isopropylphenylene diisocyanate, toluene diisocyanate, diethylphenylene diisocyanate, diisopropylphenylene diisocyanate, trimethylbenzene triisocyanate, benzene triisocyanate, biphenyl diisocyanate, toluidine diisocyanate, 4,4'-methylene bis(phenylisocyanate), 4,4'-methylene bis(2-methylphenylisocyanate), bibenzyl-4,4'-diisocyanate, bis(isocyanatophenyl)ethylene, bis(isocyanatomethyl)benzene, bis(isocyanatoethyl)benzene, bis(isocyanatopropyl)benzene, α,α,α',α'-tetramethylxylylene diisocyanate, bis(isocyanatobutyl)benzene, bis(isocyanatomethyl)naphthalene, bis(isocyanatomethylphenyl)ether, bis(isocyanatoethyl)phthalate, 2,6-di(isocyanatomethyl)furan, 2-isocyanatophenyl-4-isocyanatophenyl sulfide, bis(4-isocyanatophenyl)sulfide, bis(4-isocyanatomethylphenyl)sulfide, bis(4-isocyanatophenyl)disulfide, bis(2-methyl-5-isocyanatophenyl)disulfide, bis(3-methyl-5-isocyanatophenyl)disulfide, bis(3-methyl-6-isocyanatophenyl)-disulfide, bis(4-methyl-5-isocyanatophenyl)disulfide, bis(4-methoxy-3-isocyanatophenyl)disulfide, 1,2-diisothiocyanatobenzene, 1,3-diisothiocyanatobenzene, 1,4-diisothiocyanatobenzene, 2,4-diisothiocyanatotoluene, 2,5-diisothiocyanato-m-xylene, 4,4'-methylene bis(phenylisothiocyanate), 4,4'-methylene bis(2-methylphenylisothiocyanate), 4,4'-methylene bis(3-methylphenylisothiocyanate), 4,4'-diisothiocyanatobenzophenone, 4,4'-diisothiocyanato-3,3'-dimethylbenzophenone, bis(4-isothiocyanatophenyl) ether, 1-isothiocyanato-4-[(2-isothiocyanato)sulfonyl]benzene, thiobis(4-isothiocyanatobenzene), sulfonyl(4-isothiocyanatobenzene), hydrogenated tolylene diisocyanate (H₆TDI), diphenylmethane diisocyanate and dithiobis(4-isothiocyanatobenzene), and most preferably one or more of the following: 1,2-diisocyanatobenzene, 1,3-diisocyanatobenzene, 1,4-diisocyanatobenzene, diphenylmethane diisocyanate and 2,4-diisocyanatotoluene.

The polyisocyanate can also have both an isocyanate group and an isothiocyanate group, such as 1-isocyanato-6-isothiocyanatohexane, 1-isocyanato-4-isothiocyanatocyclohexane, 1-isocyanato-4-isothiocyanatobenzene, 4-methyl-3-isocyanato-1-isothiocyanatobenzene, 2-isocyanato-4,6-diisothiocyanato-1,3,5-triazine, 4-isocyanatophenyl-4-isothiocyanatophenyl sulfide and 2-isocyanatoethyl-2-isothiocyanatoethyl disulfide.

The polyisocyanate can also be a halo-substituted, such as chloro-, bromo-, alkyl-, alkoxy-, nitro- or silane-substituted derivative of the above polyisocyanates, such as isocyanatopropyltriethoxysilane or isocyanatopropyltrimethoxysilane.

### Polyester polyol

The polyester polyol is preferably present in an amount of 5 wt% to 95 wt%, preferably 10 wt% to 90 wt%, based on the amount of the system for preparing the polyurethane polymer as 100 wt%.

The polyester polyol preferably has a hydroxyl value of 20 to 80.

The polyester polyol is preferably a linear polyester polyol.

The linear polyester polyol or the lightly branched polyester polyol is prepared by a reaction system comprising the following components: aliphatic, alicyclic or aromatic di- or polycarboxylic acids, for example succinic acid, methyl succinic acid, glutaric acid, adipic acid, pimelic acid, suberic acid, azelaic acid, sebacic acid, nonanedicarboxylic acid, decanedicarboxylic acid, terephthalic acid, isophthalic acid, phthalic acid, tetrahydrophthalic acid, hexahydrophthalic acid, cyclohexane dicarboxylic acid, maleic acid, fumaric acid, malonic acid or trimellitic acid; anhydrides, such as phthalic anhydride, trimellitic anhydride or succinic anhydride or mixtures thereof; and low molecular weight polyols, and optionally polyols having a higher functionality, such as trimethylolpropane, glycerol or pentaerythritol, alicyclic and/or aromatic di- and poly-hydroxy compounds.

### Emulsifier

The emulsifier is preferably present in an amount of 0.1 wt% to 20 wt%, based on the amount of the system for preparing the polyurethane polymer as 100 wt%.

The emulsifier preferably comprises at least one isocyanate-reactive group and at least one emulsifying group or latent emulsifying group.

The isocyanate-reactive group is preferably one or more of the following: a hydroxyl group, a thiol group, and an amino group.

The emulsifying group or latent emulsifying group is preferably one or more of the following: a sulfonic acid group, a carboxylic acid group, a tertiary amino group, and a hydrophilic polyether.

The emulsifier comprising a sulfonic acid group and/or a carboxylic acid group is preferably one or more of the following: a diamino compound comprising a sulfonic acid group and/or a carboxylic acid group and a dihydroxy compound comprising a sulfonic acid group and/or a carboxylic acid group; further preferably one or more of the following: sodium, potassium, lithium, and tertiary amine salts of N-(2-aminoethyl)-2-aminoethanesulfonic acid, N-(3-aminopropyl)-2-aminoethanesulfonic acid, N-(3-aminopropyl)-3-aminopropanesulfonic acid, N-(2-aminoethyl)-3-aminopropanesulfonic acid, similar carboxylic acids, dimethylolpropionic acid or dimethylolbutanoic acid; and most preferably one or more of the following: N-(2-aminoethyl)-2-aminoethanesulfonates and dimethylolpropionic acid.

The sulfonic acid group or carboxylic acid group can be used directly in the form of their salts, such as sulfonates or carboxylates.

The sulfonic acid group or carboxylic acid group can also be obtained by partially or completely adding a neutralizing agent for salt formation during or after the preparation of the polyurethane polymer.

The neutralizing agent for salt formation is preferably one or more of the following: triethylamine, dimethylcyclohexylamine, ethyldiisopropylamine, ammonia, diethanolamine, triethanolamine, dimethylethanolamine, sodium hydroxide, potassium hydroxide, lithium hydroxide, calcium hydroxide, methyldiethanolamine and aminomethylpropanol; and most preferably one or more of the following: triethylamine, dimethylcyclohexylamine and ethyldiisopropylamine.

### Organic solvent

The system for preparing the polyurethane polymer may further comprise an organic solvent which is miscible with water and inert to the isocyanate group.

The organic solvent is preferably present in an amount of 0.001 wt% to 20 wt%, based on the amount of the system for preparing the polyurethane polymer as 100 wt%.

The organic solvent is preferably one or more of the following: acetone, 2-butanone, tetrahydrofuran, xylene, toluene, cyclohexane, butyl acetate, dioxane acetic acid, methoxypropyl acetate, N-methylpyrrolidone, N-ethylpyrrolidone, acetonitrile, dipropylene glycol dimethyl ether, and a solvent containing an ether or ester unit; are most preferably one or more of the following: acetone and 2-butanone.

The organic solvent may be added only at the beginning of the preparation, or a portion may be further added during the preparation as needed.

### Reactive diluent

The system for preparing the polyurethane polymer may further comprise a reactive diluent.

The reactive diluent is preferably present in an amount of 0.001 wt% to 90 wt%, based on the amount of the system for preparing the polyurethane polymer as 100 wt%.

The reactive diluent is preferably one or more of the following: an acrylic acid and an acrylate.

The aqueous polyurethane dispersion is preferably an anionic aqueous polyurethane dispersion, most preferably one or more of the following: Dispercoll U56 and Dispercoll U54.

### Adsorbent

The adsorbent is preferably present in an amount of 0.5 wt% to 3 wt%, based on the amount of the composition as 100 wt%.

The adsorbent is preferably one or more of the following: a hydrophilic molecular sieve and an amphiphilic molecular sieve.

The hydrophilic fumed nano-silica has a specific surface area of preferably 50 m²/g to 420 m²/g, and an average particle size of preferably 5 nm to 20 nm.

The specific surface area is determined by the standard test method in accordance with DIN ISO 9277.

The hydrophilic fumed nano-silica is preferably present in the form of solid powder or an aqueous dispersion.

The hydrophilic fumed nano-silica is preferably one or more of the following: Aerosil 200, Aerosil 380, and Dispercoll S 4020.

The hydrophilic molecular sieve and the amphiphilic molecular sieve preferably each independently have an average particle size of 0.1 µm to 10 µm.

The hydrophilic molecular sieve and the amphiphilic molecular sieve preferably each independently have a chemical solvent content of no more than 0.5 wt%, and are most preferably free of any chemical solvent.

The hydrophilic molecular sieve is preferably MCM 41.

The amphiphilic molecular sieve is preferably Zeoflair 200.

### Chelating agent

The chelating agent is preferably present in an amount of 0.08 wt% to 0.8 wt%, based on the amount of the composition as 100 wt%.

The chelating agent is preferably present in the form of a water-soluble salt, which satisfies the following conditions: when the water-soluble salt has a content of 4.3^{∗}10⁻⁷ mol/g in its aqueous solution, the aqueous solution has a pH value of more than 4, preferably more than 6, and most preferably more than 9.

The solubility of the water-soluble salt in water is preferably no less than 0.15 g/100 g of water, further preferably no less than 1 g/100 g of water, and most preferably 1 g/100 g of water to 100 g/100 g of water, measured at room temperature of 20 °C.

The chelating agent is preferably one or more of the following: an ethylenediamine tetraacetate, a tartrate, a citrate, a pyrophosphate, a tripolyphosphate, a hexametaphosphate, and a gluconate; further preferably one or more of the following: an ethylenediamine tetraacetate, an alkali metal tartrate, an alkali metal citrate, an alkali metal pyrophosphate, an alkali metal tripolyphosphate, an alkali metal hexametaphosphate, and an alkali metal gluconate; more preferably one or more of the following: a monovalent cationic ethylenediamine tetraacetate, a monovalent cationic tartrate, a monovalent cationic citrate, a monovalent cationic pyrophosphate, a monovalent cationic tripolyphosphate, a monovalent cationic hexametaphosphate, a monovalent cationic aminotrimethylenephosphonate, a monovalent cationic ethylenediamine tetramethylenephosphonate, a monovalent cationic diethylenetriamine pentamethylenephosphonate and a monovalent cationic gluconate; still preferably one or more of the following: a monovalent cationic ethylenediamine tetraacetate, a monovalent cationic tartrate, a monovalent cationic citrate, a monovalent cationic pyrophosphate, a monovalent cationic tripolyphosphate, a monovalent cationic hexametaphosphate, and a monovalent cationic gluconate; and most preferably one or more of the following: tetrasodium ethylenediamine tetraacetate, tetrapotassium ethylenediamine tetraacetate, and tetrasodium pyrophosphate.

### Stabilizer

The composition may further comprise a stabilizer, which advantageously reduces the hydrolysis of the composition and thereby extends the pot life of the composition.

The stabilizer is preferably one or more of the following: a carbodiimide compound, an epoxy compound, an oxazoline compound, and an aziridine compound.

The stabilizer has a content of preferably 0 to 10 wt%, further preferably 0.5 wt% to 10 wt%, and most preferably 0.5 wt% to 2 wt%, based on the amount of the solid components of the composition as 100 wt%.

### Additive

The composition may further comprise an additive.

The additive is preferably one or more of the following: a co-adhesive, a thickener, an adhesion promoter, a lubricant, a wetting additive, a dye, a light stabilizer, an aging inhibitor, a pigment, a flow controlling agent, an antistatic agent, a UV absorber, a film forming aid, an antifoaming agent and a plasticizer.

The amount of the additive is well known to those skilled in the art.

### Aqueous dispersion

The composition may further comprise an aqueous dispersion different from the aqueous polyurethane dispersion, preferably one or more of the following: an aqueous polyester dispersion, an aqueous polyurethane-polyacrylate dispersion, an aqueous polyacrylate dispersion, an aqueous polyester-polyacrylate dispersion, an alkyd resin, an aqueous polyamide/imide dispersion, and an aqueous polyepoxide dispersion.

The weight ratio of the aqueous dispersion different from the aqueous polyurethane dispersion to the aqueous polyurethane dispersion is preferably between 0.01 and 0.9.

### Method of preparing the composition

When the adsorbent is a combination of two or more kinds, each adsorbent may be premixed and then mixed with the aqueous polyurethane dispersion and the chelating agent, or each adsorbent may be directly mixed with the aqueous polyurethane dispersion and the chelating agent.

The aqueous polyurethane dispersion is preferably obtained by a reaction comprising the steps of:
a. reacting some or all of the polyisocyanate and the polyester polyol to obtain a prepolymer, wherein the reaction is carried out optionally in the presence of a water-miscible organic solvent which is inert to the isocyanate group, or the prepolymer is optionally dissolved by adding a water-miscible organic solvent which is inert to the isocyanate group after the reaction;
b. reacting the prepolymer, the emulsifier, the optional reactive diluent, the polyisocyanate not added in the step a, and the polyester polyol not added in the step a to obtain the polyurethane polymer; and
c. introducing water and the optional emulsifier before, during or after the step b to obtain the aqueous polyurethane dispersion.

The aqueous polyurethane polymer is preferably prepared by a prepolymer mixing method, an acetone method or a melt dispersion method, and most preferably by an acetone method.

The order for mixing the components of the system for preparing the aqueous polyurethane polymer may follow a conventional manner.

The polyisocyanate and the polyester polyol may be added in one portion or in multiple portions, and each portion may have the same component(s) as previously added or different ones.

The organic solvent present in the aqueous polyurethane dispersion can be removed by distillation. The organic solvent may be removed during the formation of the polyurethane polymer, or may be removed after the formation of the polyurethane polymer.

The chelating agent can be added in the form of a solid or an aqueous solution. It is preferably added in the form of an aqueous solution of the chelating agent, which will be more advantageous for the dispersion of the chelating agent.

The chelating agent may be directly added, or may be formed by means of acid-base neutralization in the composition. The acid-base neutralization may be complete or partial neutralization, preferably complete neutralization.

The acid may be a free acid which is neutralized with a base to form a chelating agent as a water-soluble salt. The free acid is preferably one or more of the following: an aminocarboxylic acid, a hydroxycarboxylic acid, an inorganic polyphosphoric acid, a hydroxyaminocarboxylic acid, an organic polyphosphonic acid, and a polycarboxylic acid. The aminocarboxylic acid is preferably ethylenediamine tetraacetic acid and/or aminotriacetic acid. The hydroxycarboxylic acid is preferably one or more of the following: tartaric acid, citric acid, and gluconic acid. The inorganic polyphosphoric acid is preferably one or more of the following: tripolyphosphoric acid, hexametaphosphoric acid, and pyrophosphoric acid. The hydroxyaminocarboxylic acid is preferably hydroxyethylethylenediamine triacetic acid and/or dihydroxyethylglycine.

When the composition further comprises a stabilizer, an additive or an aqueous dispersion, the method of preparing the composition according to the present invention preferably comprises the step of mixing the aqueous polyurethane dispersion, the adsorbent, the chelating agent, the optional stabilizer, the optional additive and the optional aqueous dispersion in any manner.

The article is preferably selected from the group consisting of automotive interior trim and indoor furniture.

The substrate is preferably one or more of the following: wood, plastic, metal, glass, textile, alloy, fabric, artificial leather, paper, cardboard, EVA, rubber, dermis, glass fiber, ethylene vinyl acetate copolymer, polyolefin, thermoplastic polyurethane, polyurethane foam, polymer fiber and graphite fiber; and most preferably one or more of the following: EVA, rubber, dermis, artificial leather, ethylene vinyl acetate copolymer, polyolefin, thermoplastic polyurethane and polyurethane foam.

The applying may be applying the composition to the entire surface of the substrate or only to one or more portions of the substrate surface.

The applying may be brushing, dipping, spraying, roller coating, knife coating, flow coating, casting, printing or transfer printing, preferably brushing, dipping or spraying.

The method of producing a bonded article may further comprise a step iii of heating and drying the substrate surface to which the composition is applied between the step i and step ii. When the method of producing a bonded article further comprises a step iii, step ii is contacting the substrate surface treated in step iii with a surface of the substrate itself or an additional substrate to obtain the bonded article.

The step iii of heating and drying the substrate surface to which the adhesive is applied may refer to only heating and drying the substrate surface, or may refer to heating and drying the partial or entire substrate including the substrate surface to which the adhesive is applied.

The heating and drying can remove a volatile component. The volatile component can be water.

The heating and drying is preferably one or more of the following: infrared heat radiation, near-infrared heat radiation, microwaves, and use of a convection oven or a spray dryer at an elevated temperature.

The heating temperature is as high as possible, but should not be above the temperature limit at which the substrate is subject to deformation or other damages in any uncontrolled manner.

The contacting is carried out preferably before the temperature of the substrate surface is lower than the temperature at which the adhesive is bondable.

The additional substrate may be any substrate that needs to be bonded.

The additional substrate may be the same as or different from the substrate.

Like the substrate, the additional substrate is preferably subject to coating and heating treatments.

### Two-component system

The amount of any organic solvent in the two-component system is preferably no more than 5 wt%, most preferably no more than 0.5 wt%, based on the amount of the two-component system as 100 wt%.

The two-component system is aqueous, and has a low VOC content.

The components A and B are preferably stored separately and mixed prior to use.

The weight ratio of the component A to the component B is preferably from 1:1 to 100:1, most preferably from 15:1 to 25:1.

The crosslinking agent is preferably a compound containing isocyanate group(s).

The two-component system is preferably a coating or an adhesive, most preferably a coating or an adhesive for interior trim.

The article is preferably selected from the group consisting of automotive interior trim and indoor furniture.

The substrate is preferably one or more of the following: wood, plastic, metal, glass, textile, alloy, fabric, artificial leather, paper, cardboard, EVA, rubber, dermis, glass fiber, ethylene vinyl acetate copolymer, polyolefin, thermoplastic polyurethane, polyurethane foam, polymer fiber and graphite fiber; and most preferably one or more of the following: EVA, rubber, dermis, artificial leather, ethylene vinyl acetate copolymer, polyolefin, thermoplastic polyurethane and polyurethane foam.

The applying may be applying the composition to the entire surface of the substrate or only to one or more portions of the substrate surface.

The applying may be brushing, dipping, spraying, roller coating, knife coating, flow coating, casting, printing or transfer printing, preferably brushing, dipping or spraying.

### Examples

All technical and scientific terms used herein have the same meanings as commonly understood by those skilled in the art to which the present invention belongs, unless otherwise defined. When the definition of a term in the present description conflicts with the meaning as commonly understood by those skilled in the art to which the present invention belongs, the definition described herein shall apply.

All numerical values expressing amount of ingredients, reaction conditions and the like which are used in the description and claims are to be understood as being modified by the term "about", unless otherwise specified. Accordingly, unless indicated to the contrary, the numerical values and parameters described herein are approximate values which can be varied according to the desired performance obtained as required.

The term "and/or" used herein refers to one or all of the elements mentioned.

The terms "containing", "including" and "comprising" used herein cover both the case that there are only the elements mentioned and the case that there are also other elements unmentioned in addition to the elements mentioned.

All percentages in the present invention refer to weight percentages, unless otherwise specified.

The analysis and measurement in the present invention are carried out at a temperature of 23 °C, unless otherwise specified.

The grammatical articles "one", "a", "an", and "the", as used in this specification, are intended to include "at least one" or "one or more", unless otherwise specified. By way of example, "a component" means one or more components, and thus more than one component may be contemplated and may be employed or used in an implementation of the described embodiments.

The solid content of the aqueous polyurethane dispersion is measured according to DIN-EN ISO 3251 using a HS153 moisture analyzer from Mettler Toledo.

The isocyanate group (NCO) content is determined by volume according to DIN-EN ISO 11909 and the measured data include both free and potentially free NCO contents.

The pH value is measured at 23 °C using a PB-10pH meter from Sartorius, Germany.

The specific surface area is determined by the standard test method in accordance with DIN ISO 9277.

### Raw materials and reagents

Dispercoll U56: an anionic aqueous polyurethane dispersion with a solid content of 50 ± 1%, available from Covestro AG, Germany.

Dispercoll U54: an anionic aqueous polyurethane dispersion with a solid content of 50 ± 1%, available from Covestro AG, Germany.

Desmodur DN: a HDI-based aliphatic polyisocyanate crosslinking agent with an isocyanate (NCO) content of 21.8% and a viscosity of 1250 mPa.s, available from Covestro AG, Germany.

Dispercoll S 4020: a hydrophilic fumed nano-silica dispersion having a solid content of 40 wt%, an average particle size of 15 nm, and a BET of 200 m²/g, available from Covestro AG, Germany. Aerosil 200: hydrophilic fumed nano-silica with an average particle size of 12 nm and a BET of 200 ± 25 m²/g, available from Evonik, Germany.

Aerosil 380: hydrophilic fumed nano-silica with an average particle size of 7 nm and a BET of 380 ± 30 m²/g, available from Evonik, Germany.

Aerosil R812S: hydrophobic fumed nano-silica with an average particle size of 7 nm and a BET of 220 ± 25 m²/g, available from Evonik, Germany.

Aerosil R972: hydrophobic fumed nano-silica with an average particle size of 16 nm and a BET of 110 ± 20 m²/g, available from Evonik, Germany.

Zeoflair 200: an amphiphilic molecular sieve with an average particle size of less than 7 µm, available from Zeochem.

Zeoflair 100: a hydrophobic molecular sieve with an average particle size of less than 7 µm, available from Zeochem.

MCM41: a hydrophilic molecular sieve with an average particle size of 0.2 µm-1 µm, available from Nanjing XFNANO Materials Tech Co.,Ltd.

Sodium pyrophosphate: a chelating agent, the pH value of the aqueous sodium pyrophosphate solution is 9.89 when sodium pyrophosphate has a content of 4.3^{∗}10⁻⁷ mol/g in its aqueous solution, and the solubility of sodium pyrophosphate in water measured at room temperature of 20 °C is 6.2 g/100 g, available from Jiangyin Chengxing Industrial Group Co., Ltd.

### Method of preparing the compositions of Examples 1-5 and Comparative Examples 1-11

Table 1 shows the composition of the compositions and the two-component systems of the inventive Examples and the comparative Examples, as well as the odor test results of the compositions and the two-component systems.

### Comparative Example 1, Comparative Example 11

The aqueous polyurethane dispersion was weighed according to the contents of the components shown in Table 1.

### Comparative Example 7

According to the contents of the components shown in Table 1, the aqueous polyurethane dispersion was added to a vessel, the molecular sieve adsorbent was then added while stirring at a stirring speed of 700 rpm, and finally the stirring speed was increased to 900 rpm - 1000 rpm. The stirring was continued for about 30 minutes, until all components were uniformly dispersed.

### Example 1, Comparative Example 9

According to the contents of the components shown in Table 1, the aqueous polyurethane dispersion was added to a vessel, a sodium pyrophosphate solution (dissolved in water at a concentration of 5%) and the molecular sieve were sequentially added at a stirring speed of 700 rpm, and the stirring speed was then increased to 900 rpm - 1000 rpm. The stirring was continued for about 30 minutes, until all components were uniformly dispersed.

### Comparative Examples 2-6, Comparative Example 8

According to the contents of the components shown in Table 1, the aqueous polyurethane dispersion was added to a vessel, and a small amount of the silica adsorbent was added, followed by stirring at a speed of 200 rpm until the silica was uniformly dispersed. Then, the stirring was stopped and a small amount of the silica adsorbent was further added, followed by stirring at a speed of 200 rpm until the silica was uniformly dispersed. Said step was repeated until the amount of silica shown in Table 1 was fully added, and finally the stirring speed was increased to 900 rpm - 1000 rpm. The stirring was continued for about 30 minutes, until all components were uniformly dispersed. Among them, the adsorbents of Comparative Example 5 and Comparative Example 6 could not be uniformly dispersed in other components and always floated on the surface.

### Examples 2-4, Comparative Example 10

According to the contents of the components shown in Table 1, the aqueous polyurethane dispersion was added to a vessel, and then a sodium pyrophosphate solution (dissolved in water at a concentration of 5%) was added at a stirring speed of 800 rpm. Then, the stirring was stopped and a small amount of the silica adsorbent was added, followed by stirring at a speed of 200 rpm until the silica was uniformly dispersed. Then, the stirring was stopped and a small amount of the silica adsorbent was further added, followed by stirring at a speed of 200 rpm until the silica was uniformly dispersed. Said step was repeated until the amount of silica shown in Table 1 was fully added, and finally the stirring speed was increased to 900 rpm - 1000 rpm. The stirring was continued for about 30 minutes, until all components were uniformly dispersed. Among them, the components of Comparative Example 10 gelled during the stirring.

### Method of preparing the two-component system

### Example 5

According to the contents of the components shown in Table 1, the aqueous polyurethane dispersion was added to a vessel and stirred at a speed of 700 rpm, a sodium pyrophosphate solution (dissolved in water at a concentration of 5%) and the molecular sieve were sequentially added while stirring, and the stirring speed was then increased to 900 rpm - 1000 rpm. The stirring was continued for about 30 minutes until all components were uniformly dispersed, and then the crosslinking agent was added while stirring at a speed of 400 rpm to obtain the two-component system.

### Odor test method

The odor assessment of the composition or the two-component system was carried out by means of an electronic nose as follows:
1. cutting the aluminum foil into a rectangle of 10 cm ^{∗} 20 cm;
2. taking out 1.5 ml of the composition or the two-component system to be tested by using a dropper and evenly coating it on the matte side of the aluminum foil, followed by standing at room temperature until completely dried;
3. placing the completely dried sample, together with the aluminum foil, into a transparent glass bottle having a capacity of about 1 L and free of special odor and sealing the bottle;
4. placing the glass bottle in an oven, heating it at 80 °C for 2h, and then cooling it to 60 °C and keeping this temperature for more than half an hour;
5. taking out the glass bottle from the oven, inserting the probe of Cosmos odor sensor (Cosmos XP-329IIIR, New Cosmos Electric (Shanghai) Co., Ltd.) into the glass bottle immediately after opening its cover, and measuring and recording the reading in Batch mode, wherein a larger reading indicates stronger odor of the composition or the two-component system.

**Table 1: Composition of the compositions and the two-component systems of the inventive Examples (Ex) and the comparative Examples (CE), as well as the odor test results**

| Composition/g | Ex 1 | Ex 2 | Ex 3 | Ex 4 | Ex 5 | CE 1 | CE 2 | CE 3 | CE 4 | CE 5 | CE 6 | CE 7 | CE 8 | CE 9 | CE 10 | CE 11 |
|---|---|---|---|---|---|---|---|---|---|---|---|---|---|---|---|---|
| Dispercoll U 56 | 100 | 100 | 100 | | 100 | 100 | 100 | 100 | 100 | 100 | 100 | 100 | 100 | 100 | 100 | |
| Dispercoll U 54 | | | | 100 | | | | | | | | | | | | 100 |
| Aerosil 200 | | 3 | 2.5 | 1 | | | 1 | | | | | | 2.5 | | 3 | |
| Aerosil 380 | | | | | | | | 2 | | | | | | | | |
| Dispercoll S 4020 | | | | | | | | | 5 | | | | | | | |
| Aerosil R812S | | | | | | | | | | 1 | | | | | | |
| Aerosil R972 | | | | | | | | | | | 1 | | | | | |
| Zeoflair 200 | 1 | | | | 1 | | | | | | | | | | | |
| Zeoflair 100 | | | | | | | | | | | | 1 | | | | |
| MCM 41 | | | | | | | | | | | | | | 5 | | |
| Sodium pyrophosphat | 0.1 | 0.1 | 0.8 | 0.1 | 0.1 | | | | | | | | | 0.1 | 1.5 | |
| Desmodur DN | | | | | 5 | | | | | | | | | | | |
| Odor test reading | 159 | 291 | 295 | 108 | 141 | 575 | 394 | 322 | 333 | * | * | 462 | 337 | 450 | ** | 146 |

| | | | | | | | | | | | | | | | | |
|---|---|---|---|---|---|---|---|---|---|---|---|---|---|---|---|---|
| Remarks: * The adsorbent could not be uniformly dispersed in other components and always floated on the surface; ** The components gelled during the stirring and thus the odor test could not be performed. | | | | | | | | | | | | | | | | |

When comparing Comparative Examples 1-8 with Examples 1-3, it can be seen that the inventive compositions comprising an aqueous polyurethane dispersion, an adsorbent and a chelating agent have much lower readings of odor test than those of the compositions of the Comparative Examples comprising only an aqueous polyurethane dispersion and an optional adsorbent. The adsorbents of both Comparative Example 5 and Comparative Example 6 were hydrophobic, and these adsorbents could not be uniformly dispersed in other components, indicating that it is not possible to form a composition suitable for practical use.

The composition of Comparative Example 9 comprises an aqueous polyurethane dispersion, an adsorbent and a chelating agent, but the composition has an adsorbent content of more than 3 wt% and a high reading of odor test.

The composition of Comparative Example 10 comprises an aqueous polyurethane dispersion, an adsorbent and a chelating agent, but the composition has a chelating agent content of more than 1 wt%. The components of the composition gelled during the stirring, and thus the odor test could not be performed.

When comparing Comparative Example 11 and Example 4, it can be seen that the inventive composition comprising an aqueous polyurethane dispersion, an adsorbent and a chelating agent has a much lower reading of odor test than that of the composition of the Comparative Example comprising only an aqueous polyurethane dispersion.

Example 5 refers to a two-component system comprising a component A and a component B. The component A is the inventive composition, the component B is Desmodur DN, and the two-component system has a low reading of odor test. When comparing Example 5 and Example 1, it can be seen that the two-component system has an even lower reading of odor test than that of the composition.

It is apparent to those skilled in the art that the present invention is not limited to the specific details described above, and may be embodied in other specific forms without departing from the spirit or essential characteristics of the present invention. The Examples are to be considered in all respects as illustrative but not restrictive, so that the scope of the present invention is defined by the claims rather than the foregoing description. Thus, any change, as long as it belongs to the meaning and range of equivalents of the claims, should be considered as part of this invention.

## Claims

1. A composition, **characterized in that** it comprises at least one aqueous polyurethane dispersion, at least one adsorbent, and at least one chelating agent; wherein the adsorbent is one or more of the following: a hydrophilic molecular sieve, an amphiphilic molecular sieve and a hydrophilic fumed nano-silica; the aqueous polyurethane dispersion is present in an amount of 50 wt% to 99 wt%, the adsorbent in an amount of 0.1 wt% to 3 wt%, and the chelating agent in an amount of 0.05 wt% to 1 wt%, in each case based on the amount of the composition as 100 wt%.

2. The composition according to claim 1, **characterized in that** the aqueous polyurethane dispersion comprises water and a polyurethane polymer having linear structure.

3. The composition according to claim 1 or 2, **characterized in that** the hydrophilic fumed nano-silica has a specific surface area of 50 m²/g to 420 m²/g and an average particle size of 5 nm to 20 nm.

4. The composition according to any one of claims 1 to 3, **characterized in that** the hydrophilic molecular sieve and the amphiphilic molecular sieve each independently have an average particle sizes of 0.1 µm to 10 µm.

5. The composition according to any one of claims 1 to 4, **characterized in that** the chelating agent is present in the form of a water-soluble salt, which satisfies the following conditions: when the water-soluble salt has a content of 4.3^{∗}10⁻⁷ mol/g in its aqueous solution, the aqueous solution has a pH value of more than 4, preferably more than 6, and most preferably more than 9.

6. The composition according to any one of claims 1 to 5 , **characterized in that** the chelating agent is one or more of the following: an ethylenediamine tetraacetate, a tartrate, a citrate, a pyrophosphate, a tripolyphosphate, a hexametaphosphate, and a gluconate; further preferably one or more of the following: an ethylenediamine tetraacetate, an alkali metal tartrate, an alkali metal citrate, an alkali metal pyrophosphate, an alkali metal tripolyphosphate, an alkali metal hexametaphosphate, and an alkali metal gluconate; and most preferably one or more of the following: tetrasodium ethylenediamine tetraacetate, tetrapotassium ethylenediamine tetraacetate, and tetrasodium pyrophosphate.

7. The composition according to any one of claims 1 to 6, **characterized in that** the composition is a coating or an adhesive.

8. A method of preparing a composition according to any one of claims 1 to 7, comprising the step of mixing the aqueous polyurethane dispersion, the adsorbent and the chelating agent in any manner.

9. Use of a composition according to any one of claims 1 to 7 for the preparation of an article.

10. The use according to claim 9, **characterized in that** the article is selected from the group consisting of automotive interior trim and indoor furniture.

11. An article comprising a substrate and a coating formed by applying a composition according to any one of claims 1 to 7 to the substrate.

12. A method of producing a coated article comprising the steps of applying a composition according to any one of claims 1 to 7 to a surface of a substrate and then curing it.

13. A method of producing a bonded article comprising the steps of:
i. applying a composition according to any one of claims 1 to 7 to at least one surface of a substrate; and
ii. contacting the substrate surface treated in step i with a surface of the substrate itself or an additional substrate to obtain the bonded article.

14. A two-component system comprising a component A and a component B, the component A being a composition according to any one of claims 1 to 7, and the component B being a crosslinking agent.

15. The two-component system according to claim 14, **characterized in that** the crosslinking agent is a compound containing isocyanate group(s).

16. The two-component system according to claim 14 or 15, **characterized in that** the two-component system is a coating or an adhesive.

17. Use of a two-component system according to any one of claims 14 to 16 for the preparation of an article.

18. The use according to claim 17, **characterized in that** the article is selected from the group consisting of automotive interior trim and indoor furniture.

19. An article comprising a substrate and a coating formed by applying a two-component system according to any one of claims 14 to 16 to the substrate.
